# EUROPEAN PATENT APPLICATION

(11) **EP 0 857 467 A1**
(43) Date of publication of application: **12.08.1998**
(21) Application number: 98830005.9
(22) Date of filing: 12.01.1998
(51) Int. Cl.: A61C 7/16

(54) **Orthodontic attachment and relevant formation process**

(30) Priority: 06.02.1997 IT FI970019
(71) Applicant: Leone S.p.A., 50019 Sesto Fiorentino (Firenze) (IT)
(72) Inventor:
(74) Representative: Martini, Lazzaro

(57) **Abstract**

Orthodontic attachment comprising a base to allow for the anchorage thereof to a tooth "D" of the dental arch under treatment and a body emerging from the base and exhibiting an outer slit "F" for receiving a corresponding othodontic wire arch. The base and the body of the attachment are made up a single element. The base is provided with a plurality of interconnecting pores for the glue, which are distributed along the whole base and are extended for a least a portion of its depth (p).

## Description

The present invention refers to an orthodontic attachment and relevant formation process.

It is known in orthodontics that an orthodontic attachment or "tooth attachment" comprises a base to be anchored to a tooth of the dental arch under treatment and a body emerging from the base, said body having an outwardly open slit to allow the positioning thereon of a corresponding portion of an orthodontic wire arch, so as to have one or more attachments associated to the same wire throughout the concerned dental arch. Owing to the positioning of the wire arch in the seats delimited by the slits of the attachments and to the fastening of the wire arch to the same attachments, a system of forces is thus created on the teeth allowing the gradual and slow displacement thereof until the wanted configuration is achieved.

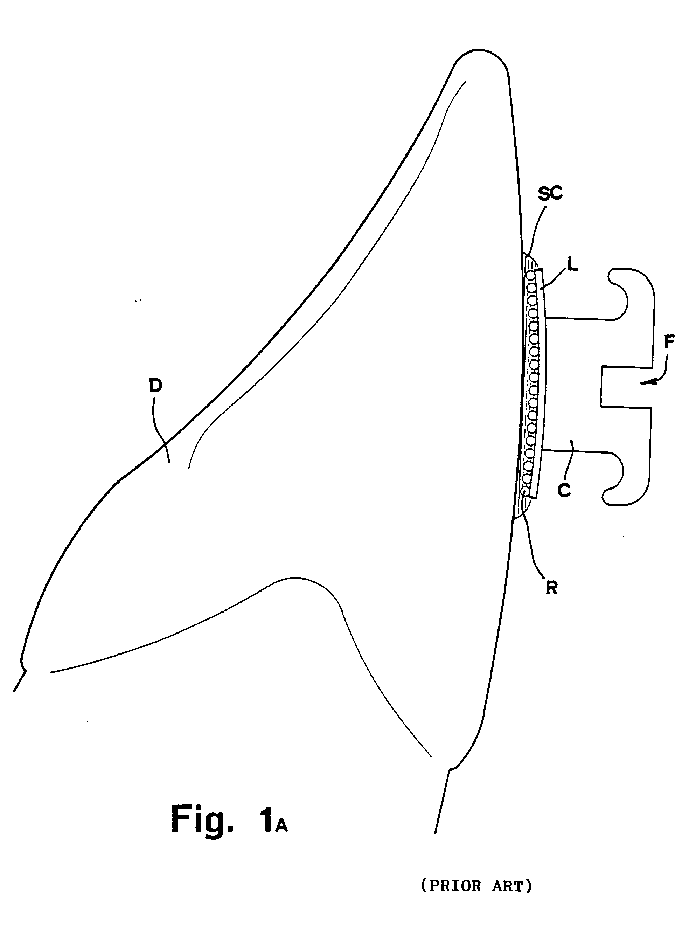

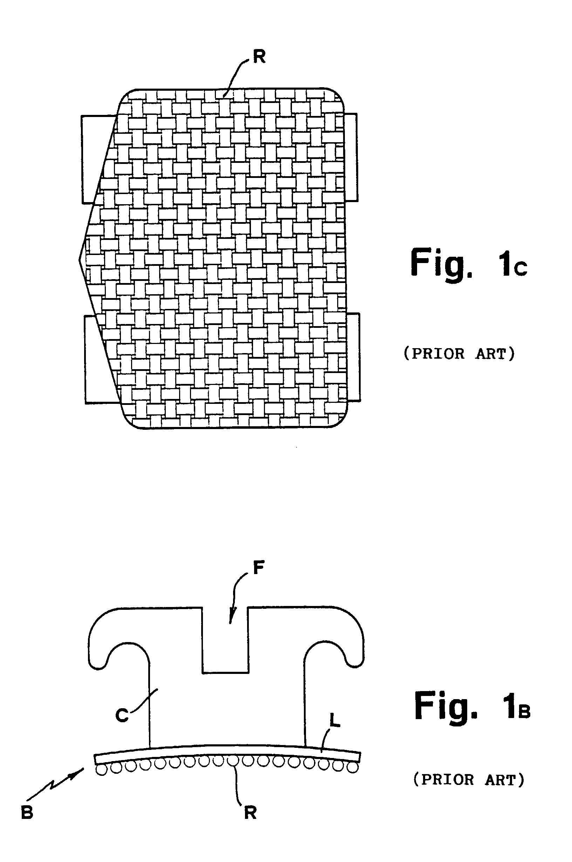

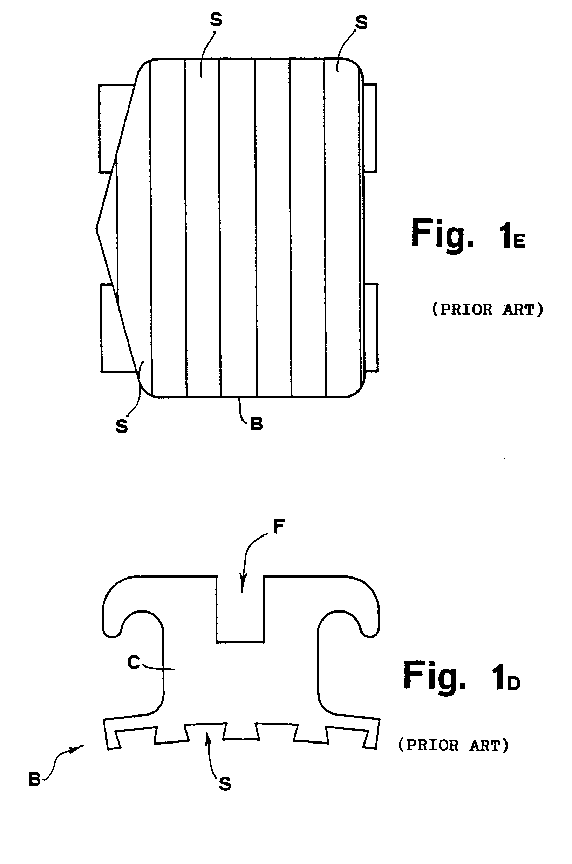

According to a known technique for the formation of orthodontic attachments, the base is formed by a net-like membrane made from steel and intended to anchor the attachment to the tooth, with the interposition of a layer of suitable glue or cement onto the dental surface being treated beforehand with an acid to facilitate the formatin of a corresponding retaining microslit whose extension is made to correspond to that of the attachment base, and by an overhanging steel lamina acting as a means for connecting the net to the attachment body. The net and the lamina are welded to each other to make up the base which is in turn welded to the attachment body in a controlled atmosphere. A typical orthodontic attachment thus constructed is depicted in the Figs. 1A-1C of the attached drawings, which show, respectively, a longitudinal section view of a conventional orthodontic attachment when in use, a cross-section view and a bottom view of the attachment.

Shown in the said figures are, in particular, the body (C) of the attachment with the slit (F) for seating the wire arch, the base (B) with net (R) and lamina (L), the glue layer (SC) and a tooth (D) of the dental arch under orthodontic treatment. This type of orthodontic attachment is disclosed in the patent US 5.295.823 and corresponding publication FR 2.697.429.
However, the formation of orthodontic attachments according to the above described operating technique brings about several drawbacks among which the need of carrying out the welding of the components through different procedures and operative times, with detrimental effects on the overall economy of the process in relation to the dayly production. Moreover, serious difficulties are encountered in centering the attachment body on the base, with the consequence of excessively high costs in relation to the current production requirements and of possible formation of imperfect attachments.

Further techniques for the construction of orthodontic attachments are known from documents US 5.267.854, US 5.267.855, US 5.108.285, EP 94500121.2, US 5.095.602, EP 441048. According to these known operating techniques, the attachments are so formed that the body and base result of one-piece structure, the base being provided with variously shaped slots or micro-reliefs in correspondence of the surface to be adhered to the tooth by a glue or cement. Shown in Figs. 1D and 1E of the accompanying drawings is an attachemnt made in one piece with the base (b) being provided with longitudinal slots (S).
However, the thus operated fixing of the attachment is insufficent to ensure the immobility thereof throughout the treatment.

The main object of the present invention is to overcome the said drawbacks.
This result has been achieved, according to the invention, by providing an orthodontic attachment and relevant process having the features indicated in the characterizing part of claims 1 and 3. Further characteristics being set forth in the dependent claims.

The advantages deriving from the present invention lie essentially in that it is possible to obtain orthodontic attachments of higher quality, more accurate, reliable, cost-effective and safer than the traditional ones.

These and other advantages and characteristics of the invention will be best understood by anyone skilled in the art from a reading of the following description in conjunction with the attached drawings given as a practical exemplification of the invention, but not to be considered in a limitative sense, wherein:
- Figs. 1A-1C are, respectively, a sectional view of a conventional orthodontic attachment, of the type having a net-like base, when in use, a sectional view and a side view of the base of the attachment of Fig. 1A;
- Figs. 1D and 1E are a sectional view of a conventional orthodontic attachment in one piece and, respectively, a bottom view of the same attachment;
- Figs. 2A-2D are, respectively, a side view of an orthodontic attachment according to the invention, a sectional view of the attachment of Fig. 2A, a view of the attachment as viewed from the base and a view of the attachment when in use.

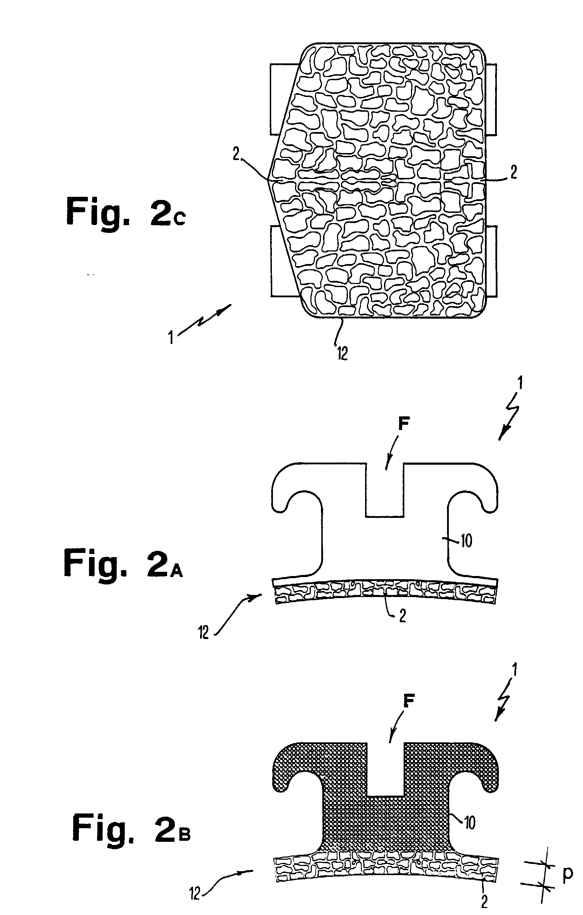

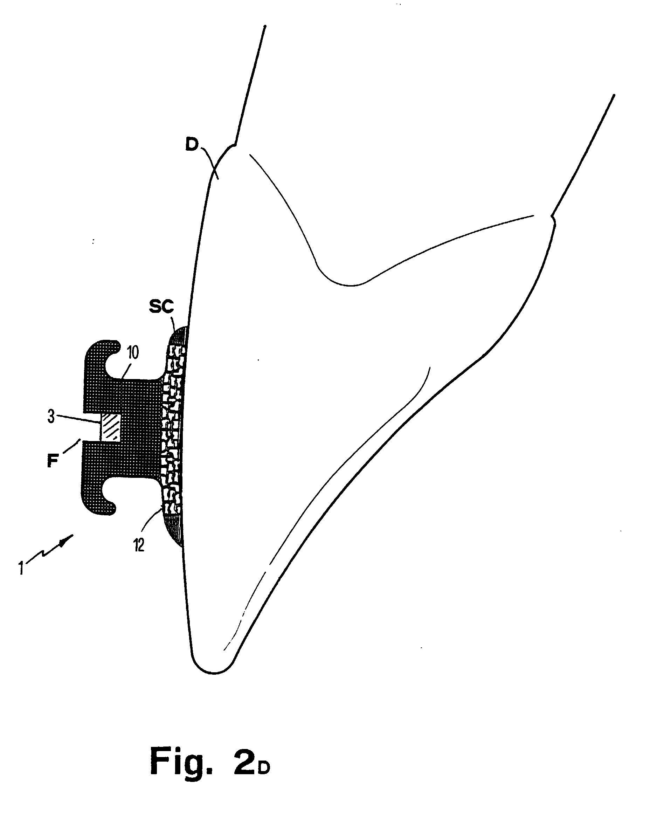

Reduced to its basic structure, and reference being made to the figures 2A-2C of the accompanying drawings, an orthodontic attachment (1) according to the invention comprises a base (12) allowing the anchoring thereof to a tooth (D) of the dental arch under treatment, and a body (10) emerging from the base (12) and exhibiting an outer slit (F) for receiving a corresponding orthodontic wire arch (3). The base (12) and the body (10) of the attachment (1) make up a single element. The base (12) which is to rest onto the tooth (D) is provided with a plurality of interconnecting pores (2) for the glue, said pores being distributed along the whole base (12) and extending for at least a portion of its depth (p). In this way, the gue or cement or composite (SC), which is suitably distributed on a surface portion of the tooth (D) after having treated the same tooth with an acid apt to favour the formation of corresponding micro-slits, penetrates deeply the structure of the base (12) through and within the pores (2), thereby forming a single body with said structure. Accordingly, securing the attachment (1) to the tooth (D) results significantly safer and more reliable in the course of time.

The glue and acid used for such purpose are known per se to those skilled in the art and, therfore, will not be described in greater detail.

This result can be obtained, for example, by injecting a suitable material into a mold or mold impression according to the procedures to be described below.
It should be understood that provision may be made for more bodies (10), substantially of paralleliped shape and parallel to each other, protruding from the same base (2).

As fas as the formation process of the above described attachment is concerned, it comprises substantially the following operating steps:
(a) preparing and mixing the raw material with a suitable binder;
(b) injecting the thus prepared material into a mold or mold impression of a shape corresponding to the attachment (1) to be produced;
(c) eliminating the binder;
(d) sintering the thus molded product.

More particularly, in the said step (a) provision is made for mixing the raw material and binder with predetermined proportions, such as 60% by weight of raw material and 40% by weight of binder. The raw material may be either of ceramic nature, such as alumina, zirconium, silicon carbide or equivalent, or of metal nature, such as stainless steel, titanium, nickel alloys or equivalent, or even of other nature, such as ferrite, graphite or equivalent.
Suitable binders may be plastics, waxy or gel materials. Mixing of raw material with the binder may be operated by means of an extruder known per se in the art which provides also for granulating the mixture thus obtained into homogeneous granules having predetermined shape and size and ensuring the repeatability of the process.

To carry out the above step (b) a mold of high strength steel is suitably used able to resist the abrasive power of the material being worked and the high pressure being produced. The workpiece obtained at the end of this step exhibits the desired shape but, owing to the brittleness imparted thereto by the binder yet to be eliminated, it may be suitable for the handling thereof to use and automatic manipulator whose characteristics correspond to those of the manipulators currently on the market and intended for handling brittle workpieces. The dimensions of the so molded piece may be significantly greater than those requested. However, the last step of the described procedure makes it possible to obtain the final goal.
The disposal of the binder during the above said step (c) takes place according to varying procedures which depend on the very nature of the same binder. For example, the binder may be eliminated by rising the temperature of the piece to 200-500 °C so as to allow the softening and then combustion and gasification thereof.

Step (d) is carried out ay high temperature by means of a furnace under vacuum or controlled atmosphere, the temperature being possibly in the order of 2000 °C. In any case, the characteristics of the selected heat treatment cycle can be made to vary in relation to the nature of the material under work and under the control of devices known per se to those skilled in the industrial automation. Upon completion of the sintering step (d), the dimensions and mechanical characteristics of the workpiece will result as demanded.

Advantageously, according to the invention, provision is made during the above step (a) to granulate the material intended to form the body (10) in a manner other than that intended to form the base (12) and, more specifically, in such a way that the granules of the material for the base (12) will be of larger diameter. For example, the granules of the material for the body (10) may be of 15-45 microns and, correspondingly, those intended for the base (12) may be of 150-300 microns. Moreover, upon the step (b) of injecting the mixture into the mold, provision is suitably made for firstly injecting the material of the body (10) and subsequently the material of the base (12) into the respective receiving regions of the mold. With the elimination of the binder, the thus obtained one-element piece exhibits characteristics of high compactdness in the part corresponding to the body (10) and of sufficient porosity in the part corresponding to the base (12) thereof, the porosity being derived from the higher granulometry of the material injected into the mold region intended to form the base (12) and from the elimination of the binder, which gives to the formation of interconnecting spaces between the material granules which result disposed absolutely at random in the space available.

The construction of the one-piece attachment molded as above described makes it possible to do away with the production inaccuracy and delays which characterize the attachments made through separate formation and subsequent assembly of the body and base. Moreover, the anchoring of the enbloc attachment to the tooth results greatly improved. It is also possible to make attachments with materials that cannot be easily combinable or workable on machine tools.

## Claims

1. Orthodontic attachment (1) comprising a base (12) to allow for the anchorage thereof to a tooth (D) of the dental arch under treatment, and a body (10) emerging from the base (12) and exhibiting an outer slit (F) for receiving a corresponding orthodontic wire arch (3), the base (12) and the body (10) of the attachment (1) making up a single element, **characterized in that** said base (12) is provided with a plurality of interconnecting pores (2) for the glue, said pores being distributed along the whole base (12) and extending for at least a portion of its depth (p).

2. Orthodontic attachment according to claim 1, characterized in that one or more bodies (10) emerge from the base (12).

3. Method for producing orthodontic attachments in one piece according to claim 1, comprising the steps of preparing and mixing the raw material with a suitable binder, granulating the thus prepared material, injecting the granulated material into a mold or mold impression of a shape corresponding to the attachment (1) to be produced, eliminating the binder and sintering the thus molded product, **characterized in that** the granules of the material intended to form the base (12) are larger in diameter than those of the material intended to form the body (10) **and in that** the injection of the granulated material intended to form the body (10) is operated separately from the injection of the granulated material for the formation of the base (12).

4. Method according to claim 3, characterized in that the granulated material intended to form the base (12) is injected subsequently to the injection of the material for the formation of the body (10).
